(19) Europäisches Patentamt
European Patent Office
Office européen des brevets

(11) **EP 3 857 041 B1**

(12) **EUROPÄISCHE PATENTSCHRIFT**

(45) Veröffentlichungstag und Bekanntmachung des Hinweises auf die Patenterteilung:
**29.05.2024 Patentblatt 2024/22**

(21) Anmeldenummer: **19773423.9**

(22) Anmeldetag: **20.09.2019**

(51) Internationale Patentklassifikation (IPC):
*F02D 41/02* (2006.01)    *F01N 3/20* (2006.01)
*F02D 41/14* (2006.01)

(52) Gemeinsame Patentklassifikation (CPC):
**F02D 41/0285; F01N 3/208; F02D 41/1406;**
F01N 2610/02; F01N 2900/0414; F01N 2900/0601;
F01N 2900/1402; F01N 2900/1404;
F01N 2900/1621; F02D 2041/1412;
F02D 2041/1437; Y02A 50/20; Y02T 10/12

(86) Internationale Anmeldenummer:
**PCT/EP2019/075391**

(87) Internationale Veröffentlichungsnummer:
**WO 2020/064566 (02.04.2020 Gazette 2020/14)**

(54) **VERFAHREN ZUR MODELLBASIERTEN STEUERUNG UND REGELUNG EINER BRENNKRAFTMASCHINE MIT EINEM SCR-KATALYSATOR**

METHOD FOR THE MODEL-BASED OPEN-LOOP AND CLOSED-LOOP CONTROL OF AN INTERNAL COMBUSTION ENGINE WITH A SCR CATALYTIC CONVERTER

PROCÉDÉ POUR LA COMMANDE ET LE RÉGLAGE BASÉS SUR LA MODÉLISATION D'UN MOTEUR À COMBUSTION INTERNE COMPRENANT UN CATALYSEUR SCR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.09.2018 DE 102018007647**

(43) Veröffentlichungstag der Anmeldung:
**04.08.2021 Patentblatt 2021/31**

(73) Patentinhaber: **Rolls-Royce Solutions GmbH
88045 Friedrichshafen (DE)**

(72) Erfinder:
• GRAICHEN, Knut
  **90562 Heroldsberg (DE)**
• BERGMANN, Daniel
  **88410 Wurzach (DE)**
• GEISELHART, Roman
  **89134 Blaustein (DE)**
• NIEMEYER, Jens
  **88045 Friedrichshafen (DE)**
• REMELE, Jörg
  **88709 Hangnau (DE)**
• HARDER, Karsten
  **88094 Oberteuringen (DE)**
• SPÄDER, Tim
  **88085 Langenargen (DE)**

(74) Vertreter: **Kordel, Mattias et al
Gleiss Große Schrell und Partner mbB
Patentanwälte Rechtsanwälte
Leitzstrasse 45
70469 Stuttgart (DE)**

(56) Entgegenhaltungen:
EP-A2- 3 062 176         DE-A1-102011 085 454
DE-A1-102015 225 279     US-A1- 2017 218 815

**Beschreibung**

Die Erfindung betrifft ein Verfahren zur modellbasierten Steuerung und Regelung einer Brennkraftmaschine mit einem SCR-Katalysator, bei dem der Betriebspunkt der Brennkraftmaschine über ein Motorsteuergerät und der Betriebspunkt des SCR-Katalysators über ein SCR-Steuergerät vorgegeben werden.

Das Verhalten einer Brennkraftmaschine wird maßgeblich über ein Motorsteuergerät in Abhängigkeit eines Leistungswunsches bestimmt. Hierzu sind in der Software des Motorsteuergeräts entsprechende Kennlinien und Kennfelder appliziert. Über diese werden aus dem Leistungswunsch, zum Beispiel einem Soll-Moment, die Stellgrößen der Brennkraftmaschine berechnet, zum Beispiel der Spritzbeginn und ein erforderlicher Raildruck. Mit Daten bestückt werden diese Kennlinien/Kennfelder beim Hersteller der Brennkraftmaschine bei einem Prüfstandslauf. Die Vielzahl dieser Kennlinien/Kennfelder und die Wechselwirkung der Kennlinien/Kennfelder untereinander verursachen allerdings einen hohen Abstimmungsaufwand. Ist die Brennkraftmaschine mit einem SCR-Katalysator ausgerüstet, so müssen zusätzlich die Kennlinien/Kennfelder im SCR-Steuergerät und die Interaktion mit dem Motorsteuergerät abgestimmt werden.

In der Praxis wird daher versucht den Abstimmungsaufwand durch die Verwendung von mathematischen Modellen zu reduzieren. Aus der nicht vorveröffentlichten deutschen Patentanmeldung mit dem amtlichen Aktenzeichen DE 10 2017 005 783.4 ist ein modellbasiertes Steuerungs- und Regelungsverfahren für eine Brennkraftmaschine bekannt, bei dem über ein Verbrennungsmodell Einspritzsystem-Sollwerte zur Ansteuerung der Einspritzsystem-Stellglieder und über ein Gaspfadmodell Gaspfad-Sollwerte zur Ansteuerung der Gaspfad-Stellglieder berechnet werden. Von einem Optimierer werden dann diese Sollwerte mit dem Ziel verändert, ein Gütemaß für einen Prädiktionshorizont zu minimieren. Das minimierte Gütemaß wiederum definiert dann den bestmöglichen Betriebspunkt der Brennkraftmaschine. Der Fundstelle ist jedoch kein Hinweis über das Zusammenwirken des Motorsteuergeräts mit einem SCR-Steuergerät zu entnehmen.

Die DE 10 2015 225279 A1 offenbart ein Verfahren zur prädiktiven Steuerung und/oder Regelung einer Brennkraftmaschine mit Stellgrößen unter Vorgabe eines Modells der Brennkraftmaschine.

Der Erfindung liegt daher die Aufgabe zugrunde, ein Verfahren zur modellbasierten Steuerung und Regelung einer Brennkraftmaschine nebst SCR-Katalysator zu entwickeln. Gelöst wird diese Aufgabe durch die Merkmale von Anspruch 1. Die Ausgestaltungen sind in den Unteransprüchen dargestellt.

Das Verfahren besteht darin, dass anhand eines Betreiberwunsches von einem Gesamtsystem-Optimierer ein Gesamtsystem-Gütemaß in Abhängigkeit von rückgemeldeten Größen des Motorsteuergeräts und von rückgemeldeten Größen des SCR-Steuergeräts berechnet wird. Über die Veränderung der Vorgabewerte für das Motorsteuergerät und über die Veränderung der Vorgabewerte für das SCR-Steuergerät wird vom Gesamtsystem-Optimierer das Gesamtsystem-Gütemaß für einen Prädiktionshorizont hinsichtlich der Betriebskosten minimiert. Ist ein minimiertes Gesamtsystem-Gütemaß ermittelt, so werden vom Gesamtsystem-Optimierer die Vorgabewerte für das Motorsteuergerät und die Vorgabewerte für das SCR-Steuergerät als maßgeblich zur Einstellung des Betriebspunkts der Brennkraftmaschine und des SCR-Katalysators gesetzt. Aus dem Kraftstoff- und dem Reduktionsmittel-Verbrauch werden dann die Betriebskosten, zum Beispiel über das Nelder-Mead- oder das Simplex-Verfahren, berechnet.

Minimiert wird das Gesamtsystem-Gütemaß, indem vom Gesamtsystem-Optimierer zu einem ersten Zeitpunkt ein erstes Gesamtsystem-Gütemaß berechnet wird, zu einem zweiten Zeitpunkt ein zweites Gesamtsystem-Gütemaß für den Prädiktionshorizont prognostiziert wird und eine Abweichung aus erstem und zweitem Gesamtsystem-Gütemaß bestimmt wird. Ist die Abweichung kleiner als ein Grenzwert, so wird vom Gesamtsystem-Optimierer das zweite Gesamtsystem-Gütemaß als minimiertes Gesamtsystem-Gütemaß gesetzt. In einer Alternative hierzu wird vom Gesamtsystem-Optimierer das zweite Gesamtsystem-Gütemaß als minimiertes Gesamtsystem-Gütemaß nach Durchlaufen einer vorgebbaren Anzahl von Neuberechnungen gesetzt.

Vom Gesamtsystem-Optimierer werden dem Motorsteuergerät als Vorgabewerte ein NOx-Sollwert und ein Abgastemperatur-Sollwert bereitgestellt. Dem SCR-Steuergerät werden vom Gesamtsystem-Optimierer als Vorgabewerte zumindest ein Emissions-Sollwert bereitgestellt, welcher wiederum aus einer Bibliothek stammt. Berechnet werden die Vorgabewerte für das Motorsteuergerät über eine Motorkarte im Sinne eines Gauß-Prozessmodells. Die Vorgabewerte für das SCR-Steuergerät werden über eine SCR-Karte, welche ebenfalls als Gauß-Prozessmodell ausgeführt ist, berechnet. Als rückgemeldete Größen des Motorsteuergeräts werden vom Gesamtsystem-Optimierer ein Kraftstoffverbrauch, ein NOx-Istwert, ein Abgastemperatur-Istwert und ein Abgasmassenstrom eingelesen. Der NOx-Istwert, der Abgastemperatur-Istwert und der Abgasmassenstrom beziehen sich auf den Turbinenaustritt eines Abgasturboladers. Als rückgemeldete Größen des SCR-Steuergeräts werden eine maximale Umsatzrate, eine SCR-Zeitkonstante und ein Reduktionsmittelverbrauch eingelesen.

Neben dem bekannten Vorteil einer Modularisierung, nämlich einer Verringerung der Komplexität, wird durch die Erfindung ein höherer Freiheitsgrad erzielt. Zum Beispiel wird bei einem Lastabwurf ein höherer Abgastemperatur-Sollwert beibehalten, wodurch der SCR-Katalysator eine höhere maximale Umsatzrate erzielt. Damit die Betriebskosten des Gesamtsystems dennoch minimiert sind, wird der neue Betriebspunkt der Brennkraftmaschine im Motorkennfeld über den Gesamtsystem-Optimierer so vorgegeben, dass sich ein geringerer spezifischer Kraftstoffverbrauch ergibt. Das heißt, die erhöhten Kosten des Reduktionsmittels werden durch die Kosten des geringeren spezifischen Kraftstoffverbrauchs aufgewogen. Durch die Verwendung von standardisierten Schnittstellen lassen sich neue Komponenten problemlos in die hierarchische Regelung integrieren, zum Beispiel eine Kühlerregelung. Bei integrierter Kühlerregelung wird der Aufwand zum Betrieb des Kühlsystems in einen Kraftstoffverbrauch umgerechnet. Der Gesamtsystem-Optimierer berechnet dann, ob eine stärkere Kühlung des Gesamtsystems zu geringeren Gesamtbetriebskosten führen würde. Besonderes Augenmerk wurde auf einen geringen Datenaustauch zwischen dem Gesamtsystem-Optimierer und den einzelnen Komponenten gelegt, wodurch, wie bereits zuvor erwähnt, die Komplexität der Systembeschreibung und der Rechenaufwand verringert werden. So werden im Gesamtsystemoptimierer Karten für das Verhalten der unterlagerten Komponenten gebildet. Darin wird das Systemverhalten bezüglich der betrachteten Schnittstellen beschrieben. Das heißt, auf der Ebene des Gesamtsystemoptimierers ist ein Detailwissen aus den unterlagerten Komponenten nicht erforderlich. Die hierarchische Regelung kann selbstverständlich auch für eine Mehr-Motorenanlage verwendet werden.

In den Figuren ist ein bevorzugtes Ausführungsbeispiel dargestellt. Es zeigen:

Figur 1    ein Systemschaubild,
Figur 2    ein modellbasiertes Systemschaubild,
Figur 3    ein Strukturbild,
Figur 4    einen Programm-Ablaufplan,
Figur 5    ein Unterprogramm,
Figur 6    Zustandsdiagramme und
Figur 7    Zeitdiagramme.

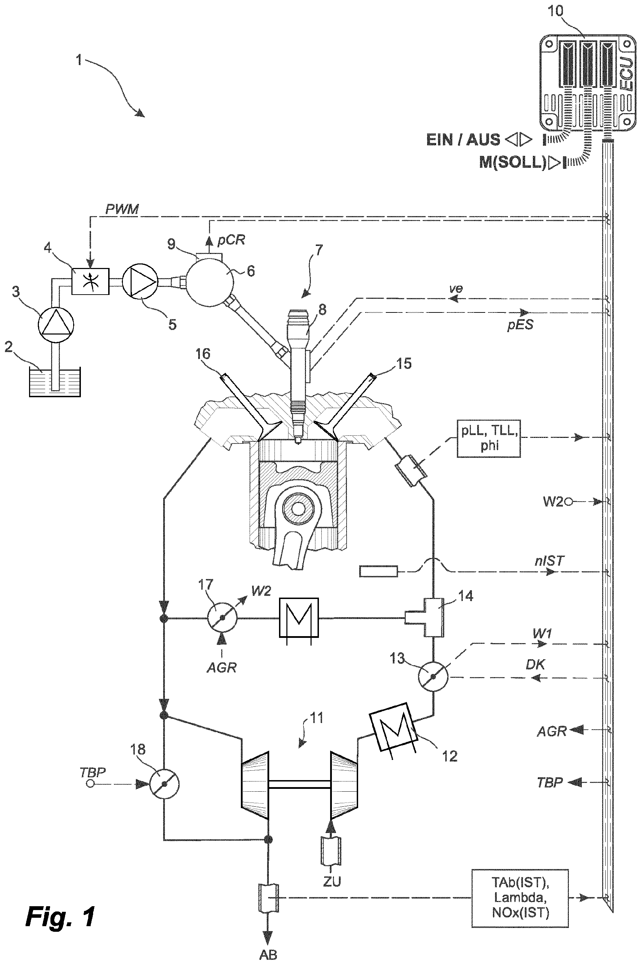

Die Figur 1 zeigt ein Systemschaubild einer elektronisch gesteuerten Brennkraftmaschine 1 mit einem Common-Railsystem. Das Common-Railsystem umfasst folgende mechanische Komponenten: eine Niederdruckpumpe 3 zur Förderung von Kraftstoff aus einem Kraftstofftank 2, eine veränderbare Saugdrossel 4 zur Beeinflussung des durchströmenden Kraftstoff-Volumenstroms, eine Hochdruckpumpe 5 zur Förderung des Kraftstoffs unter Druckerhöhung, ein Rail 6 zum Speichern des Kraftstoffs und Injektoren 7 zum Einspritzen des Kraftstoffs in die Brennräume der Brennkraftmaschine 1. Optional kann das Common-Railsystem auch mit Einzelspeichern ausgeführt sein, wobei dann zum Beispiel im Injektor 7 ein Einzelspeicher 8 als zusätzliches Puffervolumen integriert ist. Die weitere Funktionalität des Common-Railsystems wird als bekannt vorausgesetzt.

Der dargestellte Gaspfad umfasst sowohl die Luftzuführung als auch die Abgasabführung. Angeordnet sind in der Luftzuführung der Verdichter eines Abgasturboladers 11, ein Ladeluftkühler 12, eine Drosselklappe 13, eine Einmündungsstelle 14 zur Zusammenführung der Ladeluft mit dem rückgeführten Abgas und das Einlassventil 15. In der Abgasführung angeordnet sind neben dem Auslassventil 16 ein AGR-Stellglied 17, die Turbine des Abgasturboladers 11 und ein Turbinen-Bypassventil 18. Anstelle der dargestellten Abgasrückführung kann auch eine variable Ventilsteuerung zum Einsatz kommen.

Die Betriebsweise der Brennkraftmaschine 1 wird durch ein Motorsteuergerät 10 (ECU) bestimmt. Das Motorsteuergerät 10 beinhaltet die üblichen Bestandteile eines Mikrocomputersystems, beispielsweise einen Mikroprozessor, I/O-Bausteine, Puffer und Speicherbausteine (EEPROM, RAM). In den Speicherbausteinen sind die für den Betrieb der Brennkraftmaschine 1 relevanten Betriebsdaten als Modelle appliziert. Über diese berechnet das Motorsteuergerät 10 aus den Eingangsgrößen die Ausgangsgrößen. In der Figur 1 sind exemplarisch folgende Eingangsgrößen dargestellt: Ein Sollmoment M(SOLL), welches von einem Bediener vorgegeben wird, der Raildruck pCR, der mittels eines Rail-Drucksensors 9 gemessen wird, die Ist-Motordrehzahl nIST, der Ladeluftdruck pLL, die Ladelufttemperatur TLL, die Feuchte phi der Ladeluft, die Ist-Abgastemperatur TAb(IST), das Luft-Kraftstoffverhältnis Lambda, der NOx-Istwert NOx(IST), optional der Druck pES des Einzelspeichers 8, der Einstellwinkel w1 der Drosselklappe 13, der Einstellwinkel w2 des AGR-Stellglieds 17 und eine Eingangsgröße EIN. Unter der Eingangsgröße EIN sind die weiteren nicht dargestellten Sensorsignale zusammengefasst, beispielsweise die Kühlmitteltemperaturen. In Figur 1 sind als Ausgangsgrößen des Motorsteuergeräts 10 dargestellt: ein Signal PWM zur Ansteuerung der Saugdrossel 4, ein Signal ve zur Ansteuerung der Injektoren 7 (Spritzbeginn/ Spritzende), ein Stellsignal DK zur Ansteuerung der Drosselklappe 13, ein Stellsignal AGR zur Ansteuerung des AGR-Stellglieds 17, ein Stellsignal TBP zur Ansteuerung des Turbinen-Bypassventils 18 und eine Ausgangsgröße AUS. Die Ausgangsgröße AUS steht stellvertretend für die weiteren Stellsignale zur Steuerung und Regelung der Brennkraftmaschine 1, beispielsweise für ein Stellsignal zur Aktivierung eines zweiten Abgasturboladers bei einer Registeraufladung.

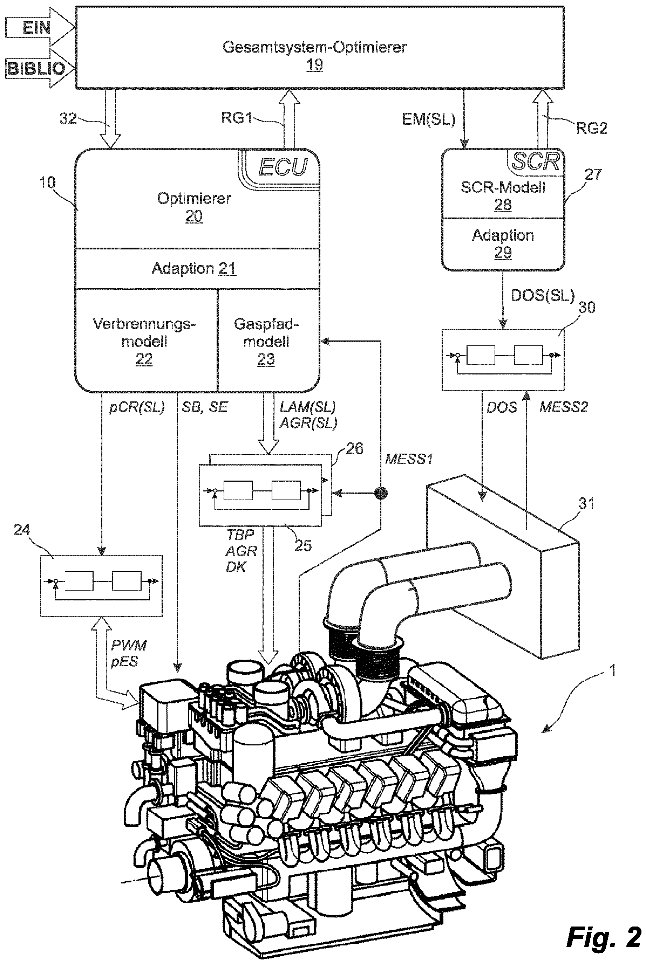

Die Figur 2 zeigt ein modellbasiertes Systemschaubild mit einem Gesamtsystem-Optimierer 19, dem Motorsteuergerät 10, der Brennkraftmaschine 1, einem SCR-Steuergerät 27 und einem SCR-Katalysator 31. Die Funktionalität besteht allgemein darin, dass der Gesamtsystem-Optimierer 19 anhand des Betreiberwunsches unter Berücksichtigung der Betriebskosten die Vorgabewerte für das Motorsteuergerät 10 und die Vorgabewerte für das SCR-Steuergerät 27

3

festlegt. Anhand dieser Vorgabewerte stellt dann das Motorsteuergerät 10 den Betriebspunkt der Brennkraftmaschine 1 ein und legt das SCR-Steuergerät 27 den Betriebspunkt des SCR-Katalysators 31 fest. Die beiden Steuergeräte können auch als Software-Komponenten auf einem einzigen Steuergerät appliziert sein. Die Eingangsgrößen des Gesamtsystem-Optimierers 19 sind: der Betreiberwunsch EIN, eine Abgas-Bibliothek BIBLIO, eine rückgemeldete Größe RG1 des Motorsteuergeräts 10 und eine rückgemeldete Größe RG2 des SCR-Steuergeräts 27. Der Betreiberwunsch EIN steht stellvertretend für das Soll-Moment (Fig. 1: M(SOLL)) bzw. für eine Soll-Drehzahl, zum Beispiel 1500 Umdrehungen/Minute bei einem 50 HZ Generatorsystem. Die Abgas-Bibliothek BIBLIO steht für die Auswahl einer gesetzlichen Emissionsklasse durch den Betreiber entsprechend dem globalen Anwendungsbereich, zum Beispiel IMO III oder Tier 4f. Die rückgemeldete Größe RG1 beinhaltet den aktuellen Verbrauch der Brennkraftmaschine, den NOx-Istwert, den Abgastemperatur-Istwert und den Abgas-Massenstrom, jeweils auf den Ausgang der Turbine des Abgasturboladers bezogen. Die rückgemeldete Größe RG2 des SCR-Steuergeräts 27 an den Gesamtsystem-Optimierer 19 entspricht einer maximalen Umsatzrate, einer SCR-Zeitkonstanten und einem Reduktionsmittelverbrauch. Die Ausgangsgrößen des Gesamtsystem-Optimierers 19 sind: die Vorgabewerte 32 an das Motorsteuergerät 10 und ein Emissions-Sollwert EM(SL) als Vorgabewert an das SCR-Steuergerät 27, letzterer ist auf den Ausgang des SCR-Katalysators bezogen. Die Vorgabewerte 32 umfassen konkret einen NOx-Sollwert und einen Abgastemperatur-Sollwert, jeweils bezogen auf den Abgaspfad nach der Turbine des Abgas-Turboladers.

Aus den Vorgabewerten 32 bestimmt dann das Motorsteuergerät 10 wiederum seine Stellgrößen und seine Sollwerte. Die Ausgangsgrößen des Motorsteuergeräts 10 sind: der Soll-Raildruck pCR(SL) für einen Raildruck-Regelkreis 24, ein LambdaSollwert LAM(SL) für einen Lambda-Regelkreis 25, ein AGR-Sollwert AGR(SL) für einen AGR-Regelkreis 26 und der Spritzbeginn SB bzw. das Spritzende SE. Die Stellgröße des Raildruck-Regelkreises 24 entspricht dann dem PWM-Signal PWM, mit welchem die Saugdrossel angesteuert wird. Der Ist-Raildruck ist mit dem Bezugszeichen pES gekennzeichnet. Die Stellgröße des Lambda-Regelkreises 25 und die Stellgröße des AGR-Regelkreises 26 entsprechen den Ansteuersignalen für die Drosselklappe DK, für den Turbinen-Bypasses TBP und für das AGR-Stellglied. Die Ist-Größen sind in der Figur mit dem Sammel-Bezugszeichen MESS1 dargestellt. Innerhalb des Steuergeräts 10 sind ein Optimierer 20, eine Adaption 21, ein Verbrennungsmodell 22 und ein Gaspfadmodell 23 angeordnet. Sowohl das Verbrennungsmodell 22 als auch das Gaspfadmodell 23 bilden das Systemverhalten der Brennkraftmaschine als mathematische Gleichungen ab. Das Verbrennungsmodell 22 bildet statisch die Vorgänge bei der Verbrennung ab. Im Unterschied hierzu bildet das Gaspfadmodell 23 das dynamische Verhalten der Luftführung und der Abgasführung ab. Das Verbrennungsmodell 22 beinhaltet Einzelmodelle zum Beispiel für die NOx- und Rußentstehung, für die Abgastemperatur, für den Abgasmassenstrom und für den Spitzendruck. Diese Einzelmodelle wiederum hängen von den Randbedingungen im Zylinder, die durch das Gaspfadmodell bestimmt werden können, und den Parametern der Einspritzung ab. Bestimmt wird das Verbrennungsmodell 22 bei einer Referenz-Brennkraftmaschine in einem Prüfstandslauf, dem sogenannten DoE-Prüfstandslauf (DoE: Design of Experiments). Beim DoE-Prüfstandslauf werden systematisch Betriebsparameter und Stellgröße mit dem Ziel variiert, das Gesamtverhalten der Brennkraftmaschine in Abhängigkeit von motorischen Größen und Umweltrandbedingungen abzubilden. Die konkreten Berechnungsvorschriften innerhalb des Motorsteuergeräts 10 sind in der nicht vorveröffentlichten deutschen Patentanmeldung mit dem amtlichen Aktenzeichen DE 10 2017 005 783.4 und der nicht vorveröffentlichten DE 10 2018 001 727.4 dargestellt, auf welche hiermit verwiesen wird.

Der Vorgabewert für das SCR-Steuergerät 27 ist der vom Gesamtsystem-Optimierer 19 festgesetzte Emissions-Sollwert EM(SL). Der Emissions-Sollwert EM(SL) wird aus der Bibliothek BIBLIO ausgelesen. Die Ausgangsgrößen des SCR-Steuergeräts 27 sind ein Dosier-Sollwert DOS(SL) als Stellgröße für den nachgeordneten SCR-Regelkreis 30 und die rückgemeldete Größe RG2 an den Gesamtsystem-Optimierer 19. Die Stellgröße für das Dosiersystem entspricht einer Dosiermenge DOS. Die Ist-Größe des SCR-Katalysators ist mit dem Bezugszeichen MESS2 gekennzeichnet. Die rückgemeldete Größe RG2 steht stellvertretend für eine maximale Umsatzrate des SCR-Katalysators, eine Zeitkonstante und der aktuelle Reduktionsmittelverbrauch. Im SCR-Steuergerät 27 sind ein SCR-Modell 28 und eine Adaption 29 dargestellt.

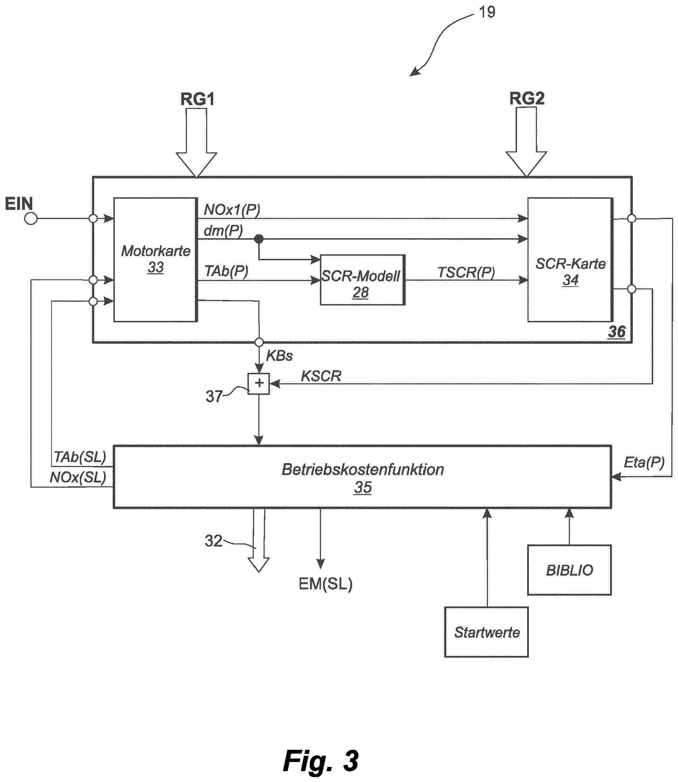

In der Figur 3 ist der Gesamtsystem-Optimierer 19 in einem Strukturbild abgebildet. Dargestellt sind ein Gesamtmodell 36 und die Betriebskostenfunktion 35. Über die Betriebskostenfunktion 35 werden die Betriebskosten minimiert, beispielsweise nach dem Nelder-Mead- oder dem Simplex-Verfahren. Hierbei stellen die Vorgabewerte für das Motorsteuergerät 10 und für das SCR-Steuergerät 27 die Freiheitsgrade des Optimierungsverfahrens dar. Bei dem Nelder-Mead-Verfahren handelt es sich um ein sogenanntes ableitungsfreies Optimierungsverfahren, welches besonders geeignet ist für Optimierungsaufgaben mit einer geringen Anzahl von Freiheitsgraden. Beim hier ausgeführten Nelder-Mead-Verfahren werden bei der Optimierung die aktuelle Betriebssituation und ein oder zwei prädizierte zukünftige Betriebssituationen berücksichtigt. Die Betriebskostenfunktion kann auch über einen längeren Zeithorizont ausgewertet werden, dabei wird dann eine größere Anzahl zeitlicher Schritte prädiziert und für die Berechnung der Betriebskosten berücksichtigt. Ein solches Vorgehen wird auch als modellprädiktive Regelung bezeichnet. Entsprechende Optimierungsverfahren zur Lösung der modellprädiktiven Regelung sind dem Fachmann bekannt. Dabei kann sowohl das stationäre als auch das dynamische Verhalten für einen zeitlichen Prädiktionsschritt betrachtet werden. Das Gesamtmodell 36 und die Betriebskostenfunktion 35 werden iterativ in einer Schleife durchlaufen. Die Eingangsgrößen des Strukturbilds sind: die vom Motorsteuergerät rückgemeldete Größe RG1, die vom SCR-Steuergerät rückgemeldete Größe RG2, die Bibliothek BIBLIO, Startwerte und die Größe EIN, welche das Soll-Moment bzw. eine Soll-Drehzahl subsumiert. Der erste Durchlauf wird mit den Startwerten begonnen und über die Betriebskostenfunktion 35 werden erste Startwerte für einen NOx-Sollwert NOx(SL) und für einen Abgastemperatur-Sollwert TAb(SL) erzeugt. Diese Startwerte sind die Eingangsgrößen für eine Motorkarte 33. Ausgeführt ist die Motorkarte 33 in Form eines Gauß-Prozessmodells. Beispielsweise in der Form:

$$\text{Motorkarte} = GP1 + GP2$$

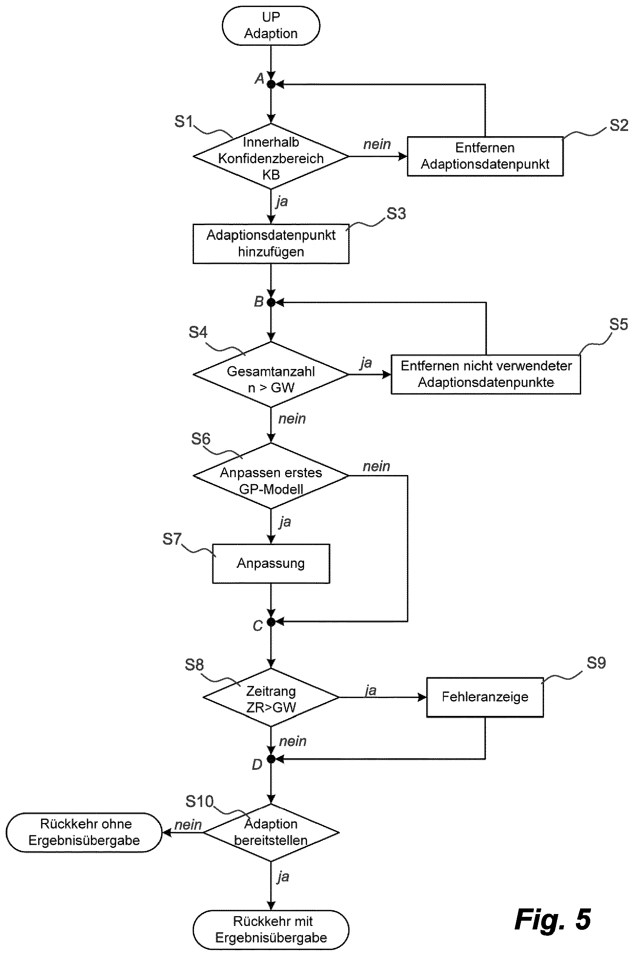

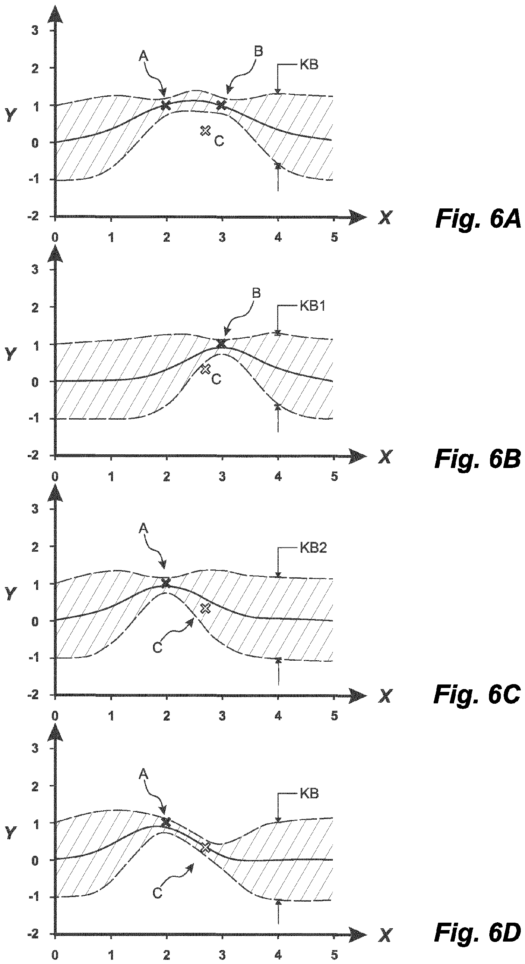

Hierbei entsprechen GP1 einem ersten Gauß-Prozellmodell zur Darstellung des Grundgitters und GP2 einem zweiten Gauß-Prozessmodell zur Darstellung der Adaptionsdatenpunkte. Das Grundgitter und die Adaptionspunkte werden aus der rückgemeldeten Größe RG1 berechnet. Gauß-Prozessmodelle sind dem Fachmann bekannt, zum Beispiel aus der DE 10 2014 225 039 A1 oder der
DE 10 2013 220 432 A1. Ganz allgemein wird ein Gaußprozess definiert durch eine Mittelwertfunktion und eine Kovarianzfunktion. Die Mittelwertfunktion wird häufig zu Null angenommen oder ein linearer/polynomieller Verlauf eingeführt. Die Kovarianzfunktion gibt den Zusammenhang beliebiger Punkte an. Ein Beispiel für die Adaption der Motorkarte 33 wird in Verbindung mit der Figuren 5 und 6 näher erläutert.
Die Ausgangsgrößen der Motorkarte 33 entsprechen einem prognostizierten ersten NOx-Wert NOx1(P), einem prognostizierten Abgasmassenstrom dm(P) mit der Einheit Kilogramm/Sekunde, einer prognostizierten Abgastemperatur TAb(P) und einem prognostiziertem Kraftstoffverbrauch bzw. den sich hieraus ergebenden Kosten KBs. Das SCR-Modell 28 bestimmt aus dem prognostizierten Abgasmassenstrom dm(P) und der prognostizierten Abgastemperatur TAb(P) eine prognostizierte SCR-Abgastemperatur TSCR(P). Aus der prognostizierten SCR-Abgastemperatur TSCR(P), dem prognostizierten Abgasmassenstrom dm(P) und dem prognostizierten ersten NOx-Wert NOx1(P) werden über eine SCR-Karte 34 die SCR-Kosten KSCR und eine prognostizierte maximale Umsatzrate Eta(P) des SCR-Katalysators berechnet. Berechnungsgrundlage für die SCR-Kosten KSCR ist der Reduktionsmittelverbrauchs, zum Beispiel der Adblue-Verbrauch. Analog zur Motorkarte ist die SCR-Karte 34 als Gauß-Prozessmodell aufgebaut. Ganz allgemein gilt daher:

$$\text{SCR-Karte} = GP1 + GP2$$

Hierbei entspricht GP1 dem ersten Gauß-Prozellmodell zur Darstellung des Grundgitters und GP2 entspricht dem zweiten Gauß-Prozessmodell zur Darstellung der Adaptionsdatenpunkte. Das Grundgitter und die Adaptionspunkte werden aus der rückgemeldeten Größe RG2 des SCR-Steuergeräts berechnet. Ganz allgemein beschreibt die SCR-Karte 34 die maximal erreichbare Umsatzrate des SCR-Katalysators in Abhängigkeit der Betriebsbedingungen, also der SCR-Abgastemperatur und des Abgasmassenstroms.
An einer Summationsstelle 37 werden die Kosten KBs und die Kosten KSCR summiert und das Ergebnis auf die Betriebskostenfunktion 35 geführt. In der Betriebskostenfunktion 35 wird dann ein Gesamtsystem-Gütemaß als Integral der quadratischen Soll-Istabweichungen innerhalb des Prädiktionshorizonts berechnet,
[0022] in der Form:

$$(1) \ J = \int (\text{Kosten BKM} + \text{Kosten SCR} + [\max(0, (Eta(SL) - Eta(P)))^2]) \ dt$$

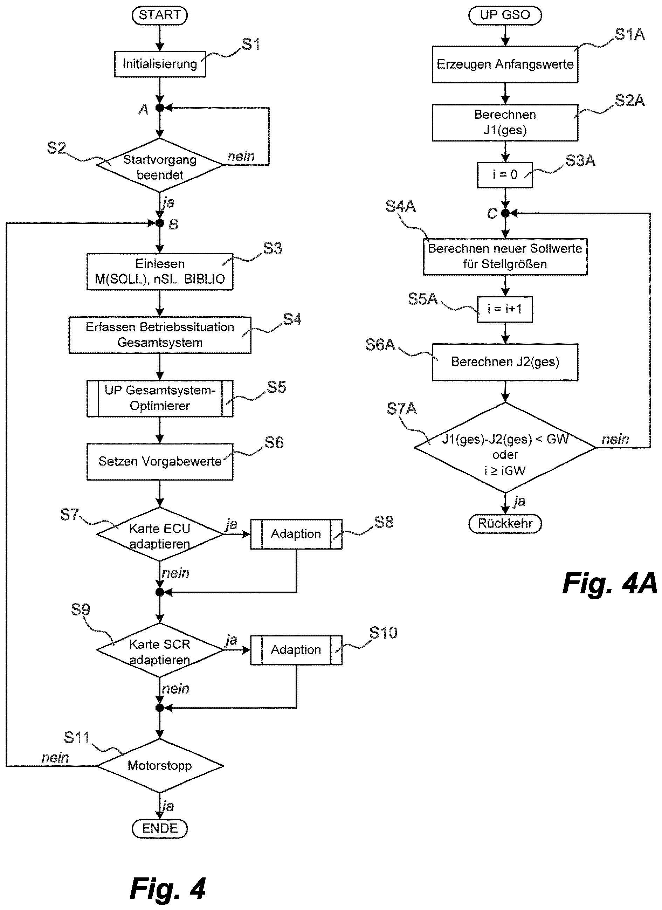

Hierin entspricht die Größe Eta(SL) dem Sollwert der maximal erreichbaren Umsatzrate des SCR-Katalysators und die Größe Eta(P) der vorausberechneten maximal erreichbaren Umsatzrate des SCR-Katalysators.
Minimiert werden nun die Kosten, indem über die Betriebskostenfunktion 35 der NOx-Sollwert NOx(SL) und der Abgastemperatur-Sollwert TAb(SL) verändert werden, über die Schleife ein neues Gesamtsystem-Gütemaß berechnet wird und die beiden berechneten Gesamtsystem-Gütemaße miteinander verglichen werden. Siehe hierzu die Beschreibung zur Figur 4. Wurde ein Minimum aufgefunden, so werden die Vorgabewerte 32 an das Motorsteuergerät 10 und der Emissions-Sollwert EM(SL) als Vorgabewert an das SCR-Steuergerät 27 ausgegeben.
In der Figur 4 ist das Verfahren zur Bestimmung der minimalen Betriebskosten in einem Programm-Ablaufplan dargestellt. Nach der Initialisierung bei S1 wird bei S2 geprüft, ob der Startvorgang beendet ist. Läuft dieser noch, Abfrageergebnis S2: nein, wird zum Punkt A zurückverzweigt. Ist der Startvorgang beendet, so werden bei S3 vom Gesamtsystem-Optimierer die Eingangsgrößen eingelesen, welche vom Bediener vorgegeben werden. Dies sind das Sollmoment M(SOLL), eine Soll-Motordrehzahl n(SL) und die Auswahl der Abgas-Bibliothek BIBLIO. Im Anschluss daran wird bei S4 die Betriebssituation des Geamtsystems, also der Brennkraftmaschine mit dem SCR-Katalysator, erfasst. Definiert wird die Betriebssituation über die Messgrößen, insbesondere über die Ist-Motordrehzahl nIST, die Ladelufttemperatur TLL, den Ladeluftdruck pLL, die Feuchte phi der Ladeluft und die Temperatur des SCR-Katalysators. Bei S5 wird das Unterprogramm Gesamtsystem-Optimierer aufgerufen, welches in der Figur 4A dargestellt ist. In diesem Unterprogramm werden bei S1A die Anfangswerte erzeugt. Aus diesen Anfangswerten wird dann bei S2A ein erstes Gesamtsystem-Gütemaß J1 (ges) anhand der Gleichung (1) berechnet und bei S3A eine Laufvariable i auf null gesetzt. Danach werden bei S4A die Anfangswerte verändert und als neue Sollwerte berechnet. Bei S5A wird die Laufvariable i um eins erhöht. Anhand der neuen Sollwerte wird bei S6A ein zweites Gesamtsystem-Gütemaß J2(ges) innerhalb des Prädiktionshorizonts, zum Beispiel für die nächsten zwei Minuten, prognostiziert. Bei S7A wiederum wird das zweite Gesamtsystem-Gütemaß J2(ges) vom ersten Gesamtsystem-Gütemaß J1(ges) subtrahiert und mit einem Grenzwert GW verglichen. Über die Differenzbildung der beiden Gesamtsystem-Gütemaße wird der weitere Fortschritt des Gesamtsystem-Gütemaßes abgeprüft. Alternativ wird anhand des Vergleichs der Laufvariablen i mit einem Grenzwert iGW geprüft, wie oft bereits eine Optimierung durchlaufen wurde. Die beiden Grenzwertbetrachtungen sind insofern ein Abbruchkriterium für eine weitere Optimierung. Ist eine weitere Optimierung möglich, Abfrageergebnis S7A: nein, so wird zum Punkt C zurück verzweigt. Anderenfalls wird in das Hauptprogramm zurückgekehrt und bei S6 vom Gesamtsystem-Optimierer das zweite Gesamtsystem-Gütemaß J2(ges) als minimales Gesamtsystem-Gütemaß gesetzt. Aus dem minimalen Gütemaß resultieren dann die Vorgabewerte für das Motorsteuergerät und das SCR-Steuergerät. Danach wird bei S7 geprüft, ob die Motorkarte adaptiert werden soll. Bei positivem Prüfergebnis wird bei S8 in das Unterprogramm Adaption gewechselt. Das Unterprogramm ist in der Figur 5 dargestellt und wird in Verbindung damit erläutert. Nach Durchlaufen des Unterprogramms wird der Programm-Ablaufplan bei S9 fortgesetzt. Bei negativem Prüfergebnis bei S7, Abfrageergebnis S7: nein, wird bei S9 abgefragt, ob die SCR-Karte adaptiert werden soll. Bei positivem Prüfergebnis wird bei S10 in das Unterprogramm Adaption (Fig. 5) verzweigt und nach Durchlaufen des Unterprogramms der Programm-Ablaufplan bei S11 fortgesetzt. Bei negativem Prüfergebnis bei S9, Abfrageergebnis S9: nein, wird bei S11 geprüft, ob ein Motorstopp initiiert wurde. Ist dies nicht der Fall, so wird zum Punkt B zurückverzweigt. Anderenfalls ist der Programm-Ablaufplan beendet.

In der Figur 5 ist das Unterprogramm UP Adaption dargestellt. Bei S1 wird geprüft, ob der aktuelle Datenpunkt innerhalb des gültigen Konfidenzbereichs KB liegt. Liegt dieser außerhalb des gültigen Konfidenzbereichs KB, Abfrageergebnis S1: nein, so wird zu S2 verzweigt und ein bereits abgespeicherter Adaptionsdatenpunkt entfernt. Danach wird zum Punkt A zurückverzweigt und erneut bei S1 geprüft, ob nunmehr der aktuelle Adaptionsdatenpunkt im neuen Konfidenzbereich liegt. Dieser Fall ist in der Figur 6 dargestellt und wird in Verbindung mit der Figur 6 erläutert. In der Schleife S1 und S2 werden also Adaptionsdatenpunkte solange aus dem zweiten Gauß-Prozessmodell entfernt bis der aktuelle Adaptionsdatenpunkt innerhalb des neuen Konfidenzbereichs liegt. Wurde bei S1 festgestellt, dass der aktuelle Datenpunkt innerhalb des Konfidenzbereichs KB liegt, Abfrageergebnis S1: ja, so wird bei S3 der aktuelle Adaptionsdatenpunkt dem zweiten Gauß-Prozessmodell hinzugefügt. Anschließend wird bei S4 geprüft, ob die Gesamtanzahl n der Adaptionsdatenpunkte größer als ein Grenzwert GW ist. Ist dies nicht der Fall, Abfrageergebnis S4: nein, so wird der Programmablauf bei S6 fortgesetzt. Anderenfalls wird bei S5 derjenige Adaptionsdatenpunkt entfernt, der den Mittelwert am wenigsten beeinflusst. Anschließend wird zum Punkt B zurückverzweigt und bei S4 erneut die Gesamtanzahl n abgefragt. Über die Schleife S4/S5 werden daher so viele Adaptionsdatenpunkte aus dem zweiten Gauß-Prozessmodell entfernt bis die Gesamtanzahl n unterhalb des Grenzwerts GW liegt. Von Vorteil sind ein reduzierter Speicheraufwand und eine schnellere Durchlaufzeit.

Bei S6 wird geprüft, ob das erste Gauß-Prozessmodell zur Darstellung des Grundgitters angepasst werden muss. Ist dies nicht erforderlich, Abfrageergebnis S6: nein, so wird der Programmablauf beim Punkt C fortgesetzt. Ist eine Anpassung erforderlich, Abfrageergebnis S6: ja, so wird das erste Gauß-Prozessmodell in der Form angepasst, dass der Erwartungswert des ersten Gauß-Prozessmodells über das zweite Gauß-Prozessmodell rückangepasst wird. Danach wird der Programmablauf beim Punkt C fortgesetzt. Bei S8 wird ein Zeitrang ZR auf Grenzwertüberschreitung geprüft. Jedem Datenpunkt im ersten Gauß-Prozessmodell wird ein Zeitstempel eingeprägt. Eine Veränderung des Datenpunkts, also eine zeitliche Drift, verändert den Zeitrang. Wird bei S8 festgestellt, dass der Zeitrang ZR größer als der Grenzwert GW ist, Abfrageergebnis S8: ja, so wird bei S9 ein Warnhinweis sowie die verbleibende Restnutzungsdauer ausgegeben und der Programmablauf bei S10 fortgesetzt. Wird hingegen bei S8 festgestellt, dass der Zeitrang ZR kleiner als der Grenzwert GW ist, Abfrageergebnis S8: nein, so wird der Programmablauf beim Punkt D und S10 fortgesetzt. Über die Abfrage des Zeitrangs kann ein Sensor-Ausfall, zum Beispiel des NOx-Sensors, erkannt werden. Ebenso kann hierdurch eine nicht statthafte Manipulation der Brennkraftmaschine erkannt werden. Anhand des Zeitrangs wird abgeschätzt wie lange ein modellbasierter Weiterbetrieb der Brennkraftmaschine und des SCR-Katalysators trotz Sensordefekts noch möglich ist. Bei S10 wird geprüft, ob die adaptierten Werte im Hauptprogramm verwendet werden sollen. Bei positiver Prüfung, Abfrageergebnis S10: ja, erfolgt eine Rückkehr ins Hauptprogramm der Figur 4 mit Ergebnisübergabe ans Hauptprogramm. Bei negativer Prüfung, Abfrageergebnis S10: nein, erfolgt eine Rückkehr ins Hauptprogramm der Figur 4 ohne Ergebnisübergabe ans Hauptprogramm.

In der Figur 6 ist der Fall dargestellt, dass der aktuelle Adaptionsdatenpunkt, zum Beispiel der Motorkarte, nicht im gültigen Konfidenzbereichs liegt. Das dargestellte Verfahren ist in analoger Vorgehensweise auf die SCR-Karte übertragbar. Definiert wird der gültige Konfidenzbereich anhand der Mittelwerts MW (Erwartungswert My) und der Kovarianz (Sigma²). Die Figur 6 umfasst die Figuren 6A bis 6D. Zur besseren Darstellung sind diese zweidimensional dargestellt. Auf der Abszisse aufgetragen ist hierbei eine Größe X, welche stellvertretend für die Eingangsgrößen des Modells stehen, also den vom Motorsteuergerät rückgemeldeten Größen RG1, dem NOx-Sollwert NOx(SL) und dem Abgastemperatur-Sollwert TAb(SL). Auf der Ordinate dargestellt ist eine Größe Y, welche stellvertretend für adaptierbare Modellwerte steht, zum Beispiel dem Kraftstoffverbrauch der Brennkraftmaschine. In der Praxis sind die Größen X und Y also multidimensional. In der Figur 6A dargestellt sind ein erster Adaptionsdatenpunkt A (2/1), ein zweiter Adaptionsdatenpunkt B (3/1) und ein aktueller Adaptionsdatenpunkt C (2.5/0). Der aktuelle Adaptionsdatenpunkt C liegt nicht innerhalb des gültigen Konfidenzbereichs KB, welcher in der Figur schraffiert dargestellt ist. Danach wird geprüft, wie sich der gültige Konfidenzbereich KB (Fig. 6A) durch das Entfernen des ersten Adaptionsdatenpunkts A (2/1) verändern würde. Aus der Figur 6B wird ersichtlich, dass trotz Entfernens des ersten Adaptionsdatenpunkts A der aktuelle Adaptionsdatenpunkt C nach wie vor außerhalb des neuen Konfidenzbereichs KB1 liegen würde. Daher wird der erste Adaptionsdatenpunkt A nicht entfernt, sondern der zweite Adaptionsdatenpunkt B (3/1). Wie in der Figur 6C dargestellt ist, liegt nunmehr der aktuelle Adaptionsdatenwert C innerhalb des neuen Konfidenzbereichs KB2. Daher wird das zweite Gauß-Prozessmodell in der Form angepasst, dass der aktuelle Adaptionsdatenpunkt C (2.5/0) übernommen wird und der bereits abgespeicherte erste Adaptionsdatenpunkt A (2/1) verbleibt. Aufgrund der Neuberechnung ergibt sich dann ein neuer Konfidenzbereich KB, wie in der Figur 6D dargestellt.

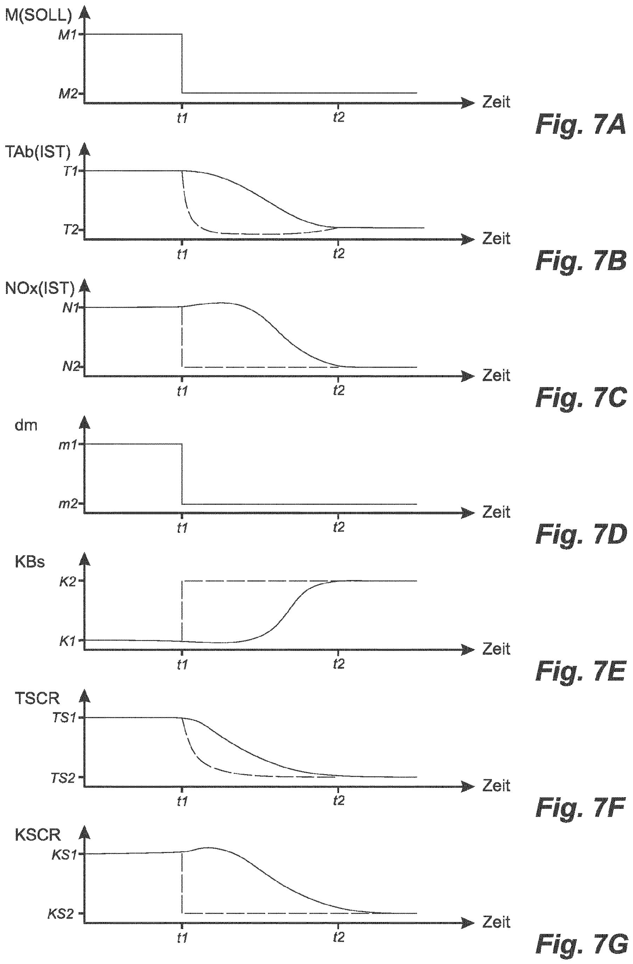

In der Figur 7 ist das Zusammenwirken des Gesamtsystem-Optimierers mit dem Motorsteuergerät und dem SCR-Steuergerät für ausgewählte Kenngrößen über der Zeit dargestellt. Die Figur 7 umfasst die Figuren 7A bis 7G. Dargestellt sind folgende Größen: Figur 7A der Verlauf des Soll-Moments M(SOLL), Figur 7B die Ist-Abgastemperatur Tab(IST) nach Turbine, Figur 7C der NOx-Istwert NOx(IST) nach Turbine, Figur 7D der Abgas-Massenstrom dm nach Turbine, Figur 7E die spezifischen Kraftstoffkosten der Brennkraftmaschine (Einspritzmenge pro kWh), Figur 7F die SCR-Temperatur TSCR und Figur 7G die Reduktionsmittelkosten KSCR. Die durchgezogene Linie kennzeichnet den vom Gesamtsystem-Optimierer beeinflussten Verlauf dieser Größen, während im Unterschied hierzu die gestrichelte Linie den Verlauf dieser Größen ohne Gesamtsystem-Optimierer zeigt.

Die weitere Erklärung erfolgt zunächst für den Fall, dass kein Gesamtsystem-Optimierer zum Einsatz kommt, also einem Verlauf entsprechend der gestrichelten Linie. Zum Zeitpunkt t1 erfolgt ein vom Bediener vorgegebener Lastabwurf von einem ersten Soll-Moment M1 auf ein zweites Soll-Moment M2. In Folge davon wird weniger Kraftstoff eingespritzt, sodass der Abgastemperatur-Istwert TAb(IST) in der Figur 7B von einem Anfangswert T1 auf einen Endwert T2 gemäß einem hyperbelförmigen Verlauf sich verringert. Zur verringerten Kraftstoffeinspritzung korrespondiert der Verlauf des NOx-Istwertes NOx(IST) in der Figur 7C und der Abgas-Massenstrom dm in der Figur 7D. Der hyperbelförmige Verlauf des Abgastemperatur-Istwerts Tab(IST) bewirkt einen analog hierzu ebenfalls abnehmenden Verlauf der SCR-Temperatur TSCR in der Figur 7F. Hieraus resultiert wiederum ein geringerer Reduktionsmittelverbrauch, das heißt, die SCR-Kosten sinken von einem ersten Wert KS1 auf einen zweiten Wert KS2. Aufgrund des Lastabwurfs wird zwar weniger Kraftstoff eingespritzt, aber im Motorkennfeld verlagert sich der Betriebspunkt der Brennkraftmaschine zu einem höheren spezifischen Kraftstoffverbrauch. Der spezifische Kraftstoffverbrauch ist als Einspritzmenge (Einheit: Kubikmillimeter je Hub) zur Motorleistung (Einheit: Kilowattstunden) definiert. Entsprechend erhöhen sich in der Figur 7E die Betriebskosten der Brennkraftmaschine von einem ersten Wert K1 auf einen zweiten Wert K2.

Die weitere Erläuterung erfolgt nun für den Fall, dass der Gesamtsystem-Optimierer in das System bei einen Lastabwurf (Figur 7A) einwirkt. Über die Sollwertvorgabe für das Motorsteuergerät wird bewirkt, dass der Abgastemperatur-Istwert TAb(IST) in der Figur 7B mit deutlich verringertem Gradienten im Zeitraum t1/t2 abfällt. Entsprechend verhält sich die SCR-Temperatur TSCR in der Figur 7F. Aufgrund der höheren SCR-Temperatur hat der SCR-Katalysator eine höhere Umsatzrate, was wiederum einen höheren Reduktionsmittelverbrauch und damit nach dem Zeitpunkt t1 zunächst zunehmende Kosten verursacht, siehe Figur 7G. Die spezifischen Betriebskosten der Brennkraftmaschine in der Figur 7E verbleiben allerdings nach dem Zeitpunkt t1 zunächst auf dem Niveau K1 und steigen danach mit einem deutlich reduzierten Gradienten. Die Gesamtkosten, das heißt die Summe der spezifischen Kraftstoffkosten KBs (Fig. 7E) und die SCR-Kosten KSCR, sind jedoch gegenüber der Anwendung ohne Gesamtsystem-Optimierer reduziert.

Bezugszeichen

| 1 | Brennkraftmaschine | 33 | Motorkarte |
|---|---|---|---|
| 2 | Kraftstofftank | 34 | SCR-Karte |
| 3 | Niederdruckpumpe | 35 | Betriebskostenfunktion |
| 4 | Saugdrossel | 36 | Gesamtmodell |

(fortgesetzt)

| 5 | Hochdruckpumpe | 37 | Summationsstelle |
|---|---|---|---|
| 6 | Rail | | |
| 7 | Injektor | | |
| 8 | Einzelspeicher | | |
| 9 | Rail-Drucksensor | | |
| 10 | Motorsteuergerät | | |
| 11 | Abgasturbolader | | |
| 12 | Ladeluftkühler | | |
| 13 | Drosselklappe | | |
| 14 | Einmündungsstelle | | |
| 15 | Einlassventil | | |
| 16 | Auslassventil | | |
| 17 | AGR-Stellglied (AGR: Abgasrückführung) | | |
| 18 | Turbinen-Bypassventil | | |
| 19 | Gesamtsystem-Optimierer | | |
| 20 | Optimierer | | |
| 21 | Adaption | | |
| 22 | Verbrennungsmodell | | |
| 23 | Gaspfadmodell | | |
| 24 | Raildruck-Regelkreis | | |
| 25 | Lambda-Regelkreis | | |
| 26 | AGR-Regelkreis | | |
| 27 | SCR-Steuergerät | | |
| 28 | SCR-Modell | | |
| 29 | Adaption | | |
| 30 | SCR-Regelkreis | | |
| 31 | SCR-Katalysator | | |
| 32 | Vorgabewerte | | |

**Patentansprüche**

1. Verfahren zur modellbasierten Steuerung und Regelung einer Brennkraftmaschine (1) mit einem SCR-Katalysator (31), bei dem der Betriebspunkt der Brennkraftmaschine (1) über ein Motorsteuergerät (10) und der Betriebspunkt des SCR-Katalysators (31) über ein SCR-Steuergerät (27) vorgegeben werden, bei dem anhand eines Betreiberwunsches von einem Gesamtsystem-Optimierer (19) ein Gesamtsystem-Gütemaß (J(ges)) in Abhängigkeit von rückgemeldeten Größen des Motorsteuergeräts (10) und von rückgemeldeten Größen des SCR-Steuergeräts (27) berechnet wird, vom Gesamtsystem-Optimierer (19) das Gesamtsystem-Gütemaß (J(ges)) über Veränderung der Vorgabewerte für das Motorsteuergerät (10) und über Veränderung der Vorgabewerte für das SCR-Steuergerät (27) für einen Prädiktionshorizont hinsichtlich der Betriebskosten minimiert wird und bei dem vom Gesamtsystem-Optimierer (19) anhand des minimierten Gesamtsystem-Gütemaßes (J(ges)) die Vorgabewerte für das Motorsteuergerät (10) und die Vorgabewerte für das SCR-Steuergerät (27) als maßgeblich zur Einstellung des Betriebspunkts der Brennkraftmaschine (1) und des SCR-Katalysators (31) gesetzt werden, wobei vom Gesamtsystem-Optimierer (19) als Vorgabewerte für das Motorsteuergerät (10) ein NOx-Sollwert (NOx(SL)) und ein Abgastemperatur-Sollwert (TAb(SL)) vorgegeben werden und vom Gesamtsystem-Optimierer (19) als Vorgabewerte für das SCR-Steuergerät (27) ein Emissions-Sollwert (EM(SL))vorgegeben wird, wobei das Gesamtsystem-Gütemaß (J(ges)) als Integral über eine Summe aus den sich aus den Vorgabewerten für das Motorsteuergerät (10) ergebenden Kosten der Brennkraftmaschine (1), den sich aus den Vorgabewerten für das SCR-Steuergerät (27) ergebenden Kosten des SCR-Katalysators (31) und einer quadratischen Abweichung des Sollwerts der maximal erreichbaren Umsatzrate des SCR-Katalysators (31) von der vorausberechneten maximal erreichbaren Umsatzrate des SCR-Katalysators (31) innerhalb des Prädiktionshorizonts berechnet wird.

2. Verfahren nach Anspruch 1, **dadurch gekennzeichnet, dass** das Gesamtsystem-Gütemaß (J(ges)) minimiert wird, indem vom Gesamtsystem-Optimierer (19) zu einem ersten Zeitpunkt ein erstes Gesamtsystem-Gütemaß (J1(ges)) berechnet wird, zu einem zweiten Zeitpunkt ein zweites Gesamtsystem-Gütemaß (J2(ges)) für den Prädiktionshorizont prognostiziert wird, eine Abweichung aus erstem (J1(ges)) und zweitem Gesamtsystem-Gütemaß (J2(ges)) bestimmt wird und vom Gesamtsystem-Optimierer (19) das zweite Gesamtsystem-Gütemaß (J2(ges)) als minimiertes Gesamtsystem-Gütemaß gesetzt wird, bei dem die Abweichung kleiner als ein Grenzwert (GW) wird.

3. Verfahren nach Anspruch 1, **dadurch gekennzeichnet, dass** das Gesamtsystem-Gütemaß (J(ges)) minimiert wird, indem vom Gesamtsystem-Optimierer (19) zu einem ersten Zeitpunkt ein erstes Gesamtsystem-Gütemaß (J1(ges)) berechnet wird, zu einem zweiten Zeitpunkt ein zweites Gesamtsystem-Gütemaß (J2(ges)) für den Prädiktionshorizont prognostiziert wird und vom Gesamtsystem-Optimierer (19) das zweite Gesamtsystem-Gütemaß (J2(ges)) als minimiertes Gütemaß nach Durchlaufen einer vorgebbaren Anzahl (i) von Neuberechnungen gesetzt wird.

4. Verfahren nach Anspruch 1, **dadurch gekennzeichnet, dass** vom Gesamtsystem-Optimierer (19) als rückgemeldete Größen des Motorsteuergeräts (10) ein Kraftstoffverbrauch, ein NOx-Istwert (NOx(IST)), ein Abgastemperatur-Istwert (TAb(IST)) und ein Abgasmassenstrom (dm) eingelesen werden und als rückgemeldete Größen des SCR-Steuergeräts (27) eine maximale Umsatzrate, eine SCR-Zeitkonstante und ein Reduktionsmittelverbrauch eingelesen werden.

5. Verfahren nach Anspruch 1, **dadurch gekennzeichnet, dass** die Betriebskostenfunktion nach dem Nelder-Mead-Verfahren oder dem Simplex-Verfahren minimiert wird.

6. Verfahren nach Anspruch 1, **dadurch gekennzeichnet, dass** die Betriebskosten mittels einer modellprädiktiven Regelung bestimmt werden.

7. Verfahren nach Anspruch 1, **dadurch gekennzeichnet, dass** vom Gesamtsystem-Optimierer (19) die Vorgabewerte für das Motorsteuergerät (10) über eine Motorkarte (33) im Sinne eines Gauß-Prozessmodells und die Vorgabewerte für das SCR-Steuergerät (27) über eine SCR-Karte (34) im Sinne eines Gauß-Prozessmodells berechnet werden.

8. Verfahren nach Anspruch 7, **dadurch gekennzeichnet, dass** die Vorgabewerte für das Motorsteuergerät und das SCR-Steuergerät adaptiert werden.

**Claims**

1. Method for model-based control and regulation of an internal combustion engine (1) with an SCR catalytic converter (31), in which the operating point of the internal combustion engine (1) is specified via an engine control unit (10) and the operating point of the SCR catalytic converter (31) is specified via an SCR control unit (27), in which, on the basis of an operator request, an overall system quality measure (J(ges)) is calculated by an overall system optimiser (19) as a function of fed back variables of the engine control unit (10) and of fed back variables of the SCR control unit (27), the overall system quality measure (J(ges)) is minimised by the overall system optimiser (19) by changing the target values for the engine control unit (10) and by changing the target values for the SCR control unit (27) for a prediction horizon with regard to the operating costs, and in which the target values for the engine control unit (10) and the target values for the SCR control unit (27) are set as significant for setting the operating point of the internal combustion engine (1) and the SCR catalytic converter (31) by the overall system optimiser (19) on the basis of the minimised overall system quality measure (J(ges)), wherein a NOx setpoint (NOx(SL)) and an exhaust gas temperature setpoint (TAb(SL)) are specified by the overall system optimiser (19) as target values for the engine control unit (10) and an emission setpoint (EM(SL)) is specified by the overall system optimiser (19) as target values for the SCR control unit (27), wherein the overall system quality measure (J(ges)) is calculated as an integral over a sum of the costs of the internal combustion engine (1) resulting from the target values for the engine control unit (10), the costs of the SCR catalytic converter (31) resulting from the target values for the SCR control unit (27) and a quadratic deviation of the setpoint value of the maximum achievable conversion rate of the SCR catalytic converter (31) from the precalculated maximum achievable conversion rate of the SCR catalytic converter (31) within the prediction horizon.

2. Method according to claim 1, **characterised in that** the overall system quality measure (J(ges)) is minimised **in that** a first overall system quality measure (J1(ges)) is calculated by the overall system optimiser (19) at a first time, and a second overall system quality measure (J2(ges)) is predicted for the prediction horizon at a second time, a deviation from the first overall system quality measure (J1(ges)) and second overall system quality measure (J2(ges)) is determined and the second overall system quality measure (J2(ges)) is set by the overall system optimiser (19) as a minimised overall system quality measure at which the deviation is less than a limit value (GW).

3. Method according to claim 1, **characterised in that** the overall system quality measure (J(ges)) is minimised by calculating a first overall system quality measure (J1(ges)) by the overall system optimiser (19) at a first time, predicting a second overall system quality measure (J2(ges)) for the prediction horizon at a second time, and wherein setting the second overall system quality measure (J2(ges)) is set by the overall system optimiser (19) as a minimised quality measure after a predeterminable number (i) of recalculations has been run through.

4. Method according to claim 1, **characterised in that** a fuel consumption, an NOx actual value (NOx(IST)), an exhaust gas temperature actual value (TAb(IST)) and an exhaust gas mass flow (dm) are read in by the overall system optimiser (19) as fed back variables of the engine control unit (10), and a maximum conversion rate, an SCR time constant and a reducing agent consumption are read in as fed back variables of the SCR control unit (27).

5. Method according to claim 1, **characterised in that** the operating cost function is minimised according to the Nelder-Mead method or the Simplex method.

6. Method according to claim 1, **characterised in that** the operating costs are determined by means of model predictive control.

7. Method according to claim 1, **characterised in that** the target values for the engine control unit (10) are calculated by the overall system optimiser (19) via an engine map (33) in the sense of a Gaussian process model and the target values for the SCR control unit (27) are calculated via an SCR map (34) in the sense of a Gaussian process model.

8. Method according to claim 7, **characterised in that** the target values for the engine control unit and the SCR control unit are adapted.

## Revendications

1. Procédé de commande et de régulation basés sur un modèle de moteur à combustion (1) avec un catalyseur SCR (31), dans lequel le point de fonctionnement du moteur à combustion (1) est prédéfini par un appareil de commande de moteur (10) et le point de fonctionnement du catalyseur SCR (31) par un appareil de commande SCR (27), dans lequel, sur un souhait de l'exploitant, un optimiseur de système global (19) calcule une mesure de qualité du système global (J(ges)) en fonction de grandeurs transmises en retour par l'appareil de commande du moteur (10) et de grandeurs transmises en retour par l'appareil de commande SCR (27), l'optimiseur de système global (19) minimise la mesure de qualité du système global (J(ges)) en modifiant les valeurs prédéfinies pour l'appareil de commande du moteur (10) et en modifiant les valeurs prédéfinies pour l'appareil de commande SCR (27) pour un horizon de prédiction en ce qui concerne les coûts d'exploitation et dans lequel l'optimiseur de système global (19) à l'aide de la mesure de qualité globale minimisée (J(ges) calcule la mesure de qualité du système global (J(ges), les valeurs de consigne pour l'appareil de commande du moteur (10) et les valeurs de consigne pour l'appareil de commande SCR (27), étant déterminantes pour le réglage du point de fonctionnement du moteur à combustion (1) et du catalyseur SCR (31), sont fixées, une valeur de consigne de NOx (NOx(SL)) et une valeur de consigne de la température des gaz d'échappement (TAb(SL)) étant prédéfinies par l'optimiseur de système global (19) en tant que valeurs de consigne pour l'appareil de commande de moteur (10) et une valeur de consigne d'émissions (EM(SL)) étant prédéfinie par l'optimiseur de système global (19) en tant que valeurs de consigne pour l'appareil de commande SCR (27), la mesure de qualité du système global (J(ges)) étant calculée comme valeur intégrée sur les coûts du moteur à combustion (1) résultant des valeurs prédéfinies pour l'appareil de commande du moteur (10), des coûts du catalyseur SCR (31) résultant des valeurs prédéfinies pour l'appareil de commande SCR (27) et d'un écart quadratique de la valeur de consigne du taux de conversion maximal réalisable du catalyseur SCR (31) par rapport au taux de conversion maximal réalisable prédit du catalyseur SCR (31) dans l'horizon de prédiction.

2. Procédé selon la revendication 1, **caractérisé en ce que** la mesure de qualité du système global (J(ges)) est minimisée en calculant par l'optimiseur de système global (19), à un premier moment, une première mesure de qualité du système global (J1(ges)), en prévoyant à un deuxième moment une deuxième mesure de qualité du système global (J2(ges)) pour l'horizon de prédiction, un écart entre la première (J1(ges)) et la deuxième mesure de qualité du système global (J2(ges)) est déterminé et la deuxième mesure de qualité du système global (J2(ges)) est définie par l'optimiseur de système global (19) comme mesure de qualité du système global minimisée, pour laquelle l'écart devient inférieur à une valeur limite (GW).

3. Procédé selon la revendication 1, **caractérisé en ce que** la mesure de qualité du système global (J(ges)) est minimisée en calculant une première mesure de qualité du système global (J1(ges)) par l'optimiseur de système global (19) à un premier moment, à un deuxième moment, une deuxième mesure de qualité du système global (J2(ges)) est pronostiquée pour l'horizon de prédiction et la deuxième mesure de qualité du système global (J2(ges)) est définie par l'optimiseur du système global (19) comme mesure de qualité minimisée après avoir effectué un nombre (i) prédéfinissable de nouveaux calculs.

4. Procédé selon la revendication 1, **caractérisé en ce qu'**une consommation de carburant, une valeur réelle de NOx (NOx(IST)), une valeur réelle de température de gaz d'échappement (TAb(IST)) et un débit massique de gaz d'échappement (dm) sont lus par l'optimiseur de système global (19) en tant que grandeurs confirmées de l'appareil de commande de moteur (10), et un taux de conversion maximal, une constante de temps SCR et une consommation d'agent de réduction sont lus en tant que grandeurs confirmées de l'appareil de commande SCR (27).

5. Procédé selon la revendication 1, **caractérisé en ce que** la fonction de coût d'exploitation est minimisée selon la méthode de Nelder-Mead ou la méthode Simplex.

6. Procédé selon la revendication 1, **caractérisé en ce que** les coûts d'exploitation sont déterminés au moyen d'une régulation prédictive de modèle.

7. Procédé selon la revendication 1, **caractérisé en ce que** l'optimiseur de système global (19) calcule les valeurs de consigne pour l'appareil de commande de moteur (10) par l'intermédiaire d'une carte de moteur (33) dans le sens d'un modèle de processus gaussien et les valeurs de consigne pour l'appareil de commande SCR (27) par l'intermédiaire d'une carte SCR (34) dans le sens d'un modèle de processus gaussien.

8. Procédé selon la revendication 7, **caractérisé en ce que** les valeurs de consigne pour l'appareil de commande du moteur et l'appareil de commande SCR sont adaptées.

**Fig. 1**

**Fig. 2**

**Fig. 3**

**Fig. 4**

**Fig. 4A**

**Fig. 5**

*Fig. 6A*

*Fig. 6B*

*Fig. 6C*

*Fig. 6D*

EP 3 857 041 B1

Fig. 7A

Fig. 7B

Fig. 7C

Fig. 7D

Fig. 7E

Fig. 7F

Fig. 7G

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017005783
- DE 102015225279 A1
- DE 102018001727
- DE 102014225039 A1
- DE 102013220432 A1